# EUROPÄISCHE PATENTSCHRIFT

(11) **EP 0 448 983 B1**
(45) Veröffentlichungstag und Bekanntmachung des Hinweises auf die Patenterteilung: **29.06.1994**
(21) Anmeldenummer: 91103114.4
(22) Anmeldetag: 01.03.1991
(51) Int. Cl.: F26B 13/10, F26B 21/02

(54) **Vorrichtung zur beidseitigen Beblasung eines bahnförmigen Materials**
Apparatus for blowing onto the two sides of a web-like material
Dispositif pour le soufflage des deux côtés d'un matériau en forme de bande

(30) Priorität: 30.03.1990 DE 4010280
(43) Veröffentlichungstag der Anmeldung: 02.10.1991
(73) Patentinhaber: WSP INGENIEURGESELLSCHAFT FÜR WÄRMETECHNIK, STRÖMUNGSTECHNIK UND PROZESSTECHNIK MIT BESCHRÄNKTER HAFTUNG, 52074 Aachen (DE)
(72) Erfinder: Kramer, Carl, Prof. Dr.-Ing., W-5100 Aachen (DE)
(74) Vertreter: Schwabe - Sandmair - Marx

(56) Entgegenhaltungen:
- DE-B- 1 218 956
- GB-A- 633 292
- GB-A- 1 186 736
- GB-A- 2 088 426
- US-A- 3 851 408
- US-A- 4 137 649

## Beschreibung

Die Erfindung betrifft eine Vorrichtung zur beidseitigen Beblasung eines bahnförmigen Materials mit einem Behandlungsgas der im Oberbegriff des Patentanspruchs 1 angegebenen Gattung.

Solche Vorrichtungen werden bei der Wärmebehandlung von Warenbahnen, wie beispielsweise von Stoffen, Blechen, Platten oder Bändern, zum Zwecke des Wärmeaustauschs, aber auch zur Trocknung eingesetzt. Um eine möglichst gleichmäßige Beblasung der Oberfläche des bahnförmigen Materials zu erzielen, sind quer zur Transportrichtung der Bahn Düsenrippen mit Düsenöffnungen vorgesehen.

Die Lücken zwischen zwei benachbarten Düsenrippen stehen als Abströmquerschnitt für den mit den Düsen auf die Bahn aufgeblasenen Behandlungsgasstrom zur Verfügung, wobei die Bahn üblicherweise horizontal geführt wird. Die Führung kann, beispielsweise bei leichten Bändern, berührungslos mittels Schwebedüsen erfolgen; insbesondere bei schwereren bahnförmigen Materialien werden zwischen den Düsenrippen des unteren Düsenfeldes Rollen angeordnet, die das bahnförmige Material unterstützen und - bei angetriebenen Rollen - gleichzeitig transportieren.

Der Oberbegriff des Anspruchs 1 geht von einem Stand der Technik aus, wie er aus dem Artikel "Anlagen zur Wärmebehandlung berührungsfrei geführter Blechbänder" von Kramer, Stein und Gerardt, veröfffentlicht in "BÄNDER BLECHE ROHRE" 11-1975, S. 453 ff. bekannt ist. Hier wird in Bild 2 eine Vorrichtung zur beidseitigen Beblasung eines bahnförmigen Materials mit einem Behandlungsgas gezeigt. Diese Vorrichtung weist einen Behandlungsraum für das annähernd geradlinig bewegte bahnförmige Material, zu beiden Seiten des bahnförmigen Materials angeordnete Düsenrippen für die Einleitung des Behandlungsgasstromes in den Behandlungsraum, und sowohl oberhalb als auch unterhalb der horizontal geführten Materialbahn angeordnete, in 360°-Spiralgehäuse eingebaute Radial-Ventilatoren auf.

Eine Vorrichtung dieser Art hat den Nachteil, daß im wesentlichen der gesamte Innenraum der Vorrichtung durch die Düsenrippen und die Radialventilatoren eingenommen wird, wodurch im Behandlungsraum kein Platz zum Einbau einer Beheizungseinrichtung oder Kühleinrichtung zur Verfügung steht. Ein weiterer Nachteil der Vorrichtung gemäß Bild 2 dieses Artikels betrifft die Tatsache daß, um die für Materialbahnen übliche Arbeitshöhe von etwa 1 m bis 1,5 m einhalten zu können, unter einer solchen Vorrichtung eine Grube vorgesehen werden muß, die so bemessen ist, daß ein Ausbau der unterhalb der Materialbahn angeordneten Ventilatoren möglich ist und außerdem noch genügend Raum für Inspektions- und Wartungsarbeiten zur Verfügung steht.

Eine solche Grube bedeutet für die Installation einer derartigen Ausführungsform einen hohen technischen und wirtschaftlichen Aufwand.

Weiterhin geht aus der deutschen Patentschrift Nr. 24 46 983 eine Vorrichtung zur beidseitigen Beblasung eines bandförmigen Materials mit einem Behandlungsgas hervor, bei der zu beiden Seiten des bahnförmigen Materials angeordnete Düsenrippen für die Einleitung des Behandlunsgasstroms in den Behandlungsraum sowie ein auf einer Seite der Düsenrippen etwas in der Mitte des Behandlungsraums angeordneter Ventilator mit horizontaler Achse zur Erzeugung des den Düsenrippen von einer Seite her zugeführten Behandlungsgasstromes einerseits und zur symmetrischen Absaugung des Behandlungsgases auf der gegenüberliegenden Seite andererseits vorgesehen sind. Da die Radialventilatoren für den Antrieb der Strömung seitlich zur Materialbahn angeordnet sind, ist auch bei relativ großen Bahnbreiten keine Grube unterhalb der Vorrichtung erforderlich. Außerdem ist die Strömungsführung oberhalb und unterhalb der Ebene der Materialbahn völlig symmetrisch, so daß sie sich besonders zur schwebenden Führung von Materialbahnen, also beispielsweise als Schwebeofen oder Schwebetrockner für Bänder, eignet.

Soll jedoch in einer solchen Vorrichtung die Materialbahn über Rollen geführt werden, wie es beispielsweise bei der Wärmebehandlung von Glasscheiben erforderlich ist, so ist wegen der Anordnung des Radial-Ventilators mit seinem Ausblasgehäuse auf einer Seite der Materialbahn die Durchführung der Rollen quer durch die Vorrichtung und die Verlagerung auf der Ventilatorseite nur begrenzt möglich und außerdem sehr schwierig.

Außerdem müssen die Rollen wesentlich länger sein als die Bahnbreite. Dies ist insbesondere bei Vorrichtungen, die bei höheren Temperaturen betrieben werden müssen, ein weiterer, schwerwiegender Nachteil.

Eine ähnliche Vorrichtung geht aus der deutschen Auslegeschrift 20 56 190 hervor, wobei ein Radial-Ventilator in einem 360°-Spiralgehäuse eingebaut ist und in einen einzigen Ausblaskanal mit konstantem Querschnitt ausbläst. Dieser Radial-Ventilator hat ein vierfach ausblasendes Gehäuse.

Ein solches Gehäuse eignet sich lediglich unter Inkaufnahme von erheblichen Wirkungsgradverlusten für Ventilatoren mit hohem Reaktionsgrad, bei denen die Druckentwicklung im wesentlichen im Laufrad stattfindet. Bei Ventilatoren mit radial endenden oder nach vorne gekrümmten Schaufeln sowie insbesondere bei Trommelläufer-Ventilatoren ist ein solches Gehäuse völlig ungeeignet. Außerdem besitzt die Vorrichtung nach der Auslegeschrift auf jeder Seite der Materialbahn nur einen einzigen Ventilator, der zugleich die oberhalb und unterhalb der Materialbahn angeordneten Düsenarme versorgt. Dadurch kann bei einer solchen Vorrichtung der Düsendruck der oberen Düsenarme gegenüber dem Düsendruck der unteren Düsenarme nicht verändert werden.

Und schließlich ist diese Vorrichtung auf die Beblasung von Textilbahnen aus Fasern, wie beispielweise Chemiefasern, abgestellt, die in der Regel luftdurchlässig sind. Die Ventilationsbedingungen sind hier demzufolge vollständig anders gelagert als bei luftundurchlässigen Materialien, so daß eine völlig symmetrische Strömungsführung oberhalb und unterhalb der Materialbahn-Ebene praktisch nicht möglich ist.

Schließlich geht aus der deutschen Offenlegungsschrift Nr. 22 65 313 noch ein Durchlauftrockner für Bahnmaterialien mit nur einem Luftförderer hervor, dessen Luftführung zunächst linear verläuft, anschließend um 90° nach oben versetzt verläuft, daraufhin um 90° seitlich versetzt weiterläuft und schließlich um 90° versetzt in eine weitere Luftzuführungsleitung übergeht. Diese äußerst ungünstige Strömungsführung schließt die Einstellung definierter Strömungsbedingungen aus.

Die US-A-3,851,408 zeigt eine Einrichtung zur Trocknung eines Gewebematerials durch ein gasförmiges Verfahrensmedium. Hierbei wird ein Behandlungsraum mit insgesamt zwei Axial-Ventilatoren, die in Düsenkästen ausblasen, vorgeschlagen. Dies kann der Beschreibung der US-A-3,851,408, Spalte 2, Zeilen 11-15 entnommen werden, wo explizit aufgeführt ist:

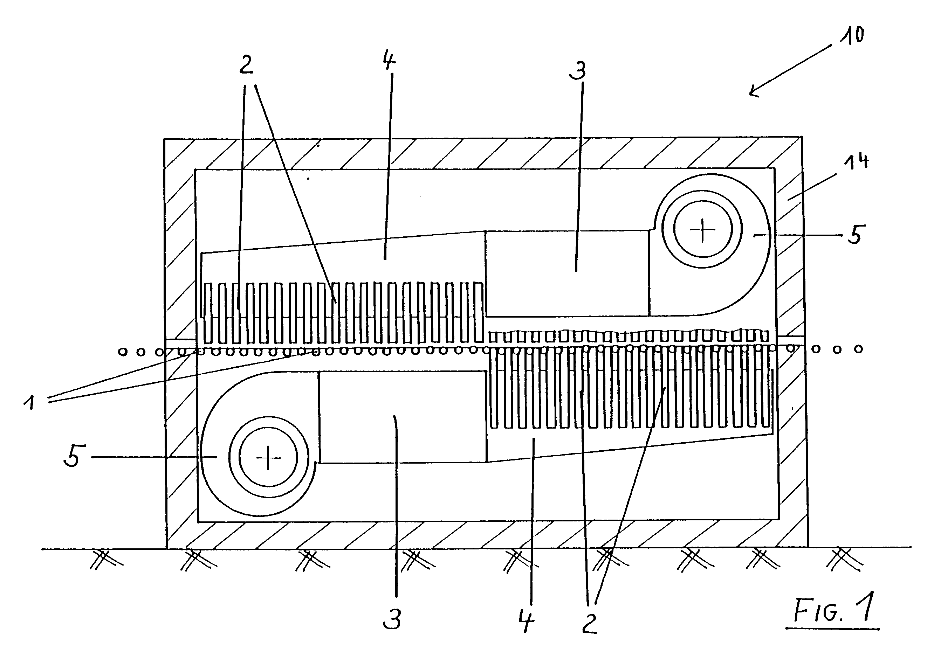

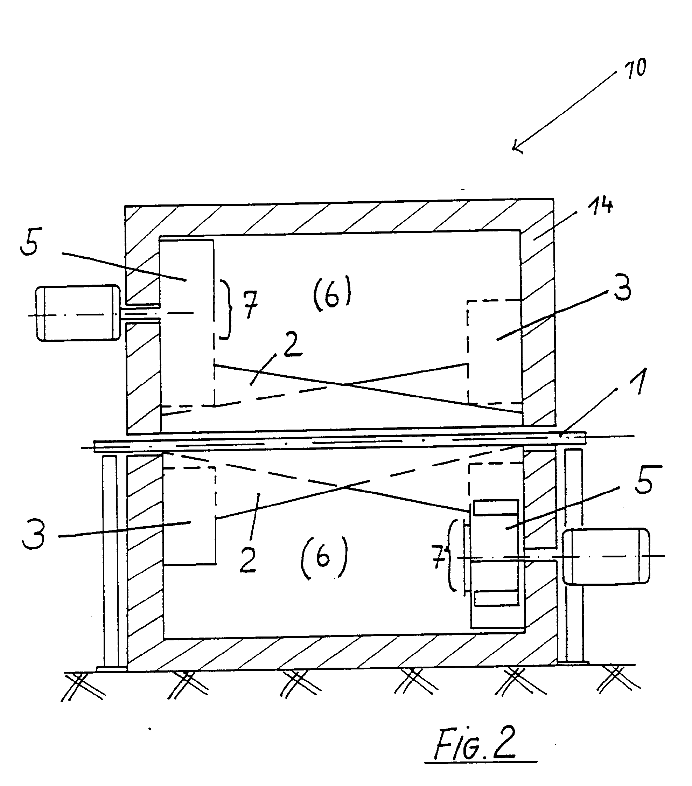

Bei den beiden Axial-Ventilatoren, die in den Figuren 1 und 2 gezeigt sind, handelt es sich um zwei übereinander angeordnete Ventilatoren, die in Düsenkästen blasen, wobei die zu trocknende Gewebebahn beidseitig von den Düsenrippen eines Düsenkastens umfaßt wird. Die Gewebebahn wird hierbei beim Beblasungsvorgang im wesentlichen vertikal geführt. Aus der Figur 1 ist noch zu erkennen, daß die Gewebebahn 14 in ihrer Breite nur einen kleinen mittleren Abschnitt des Behandlungsraums einnimmt, wobei der größere Teil des Behandlungsraums für die Strömungsführung und die darin eingebauten Axial-Ventilatoren zur Verfügung steht.

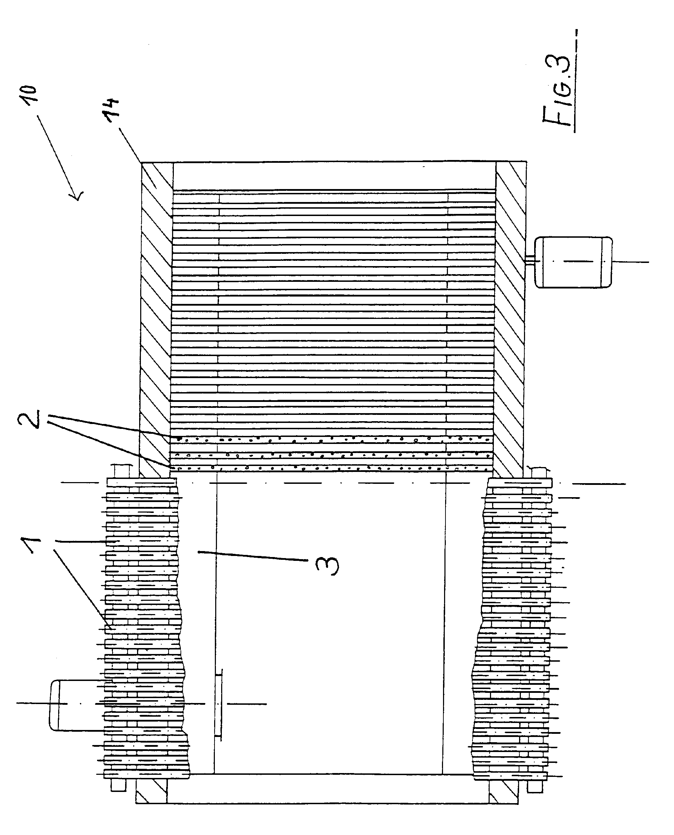

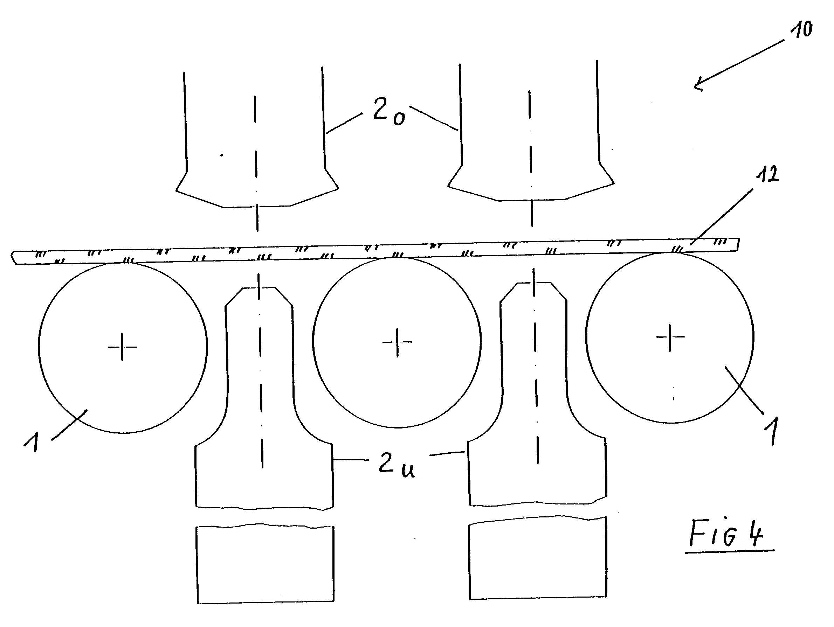

Die Ausführungsform, die in den Figuren 3 und 4 beschrieben wird, weist auf jeder Seite der Materialbahn 14′ einen Axial-Ventilator mit einem dazugehörigen Düsenkasten zur Beblasung des horizontal geführten Materials auf. Auch hier ist zu erkennen, daß das von der Oberseite der Gewebebahn abströmende Medium nur dann in den Ansaugbereich des unteren Axial-Ventilators gelangen kann, wenn die Gewebebahn in ihrer Breite nur einen kleinen mittleren Bereich des gesamten Behandlungsraums einnimmt.

Die Nachteile dieser bekannten Vorrichtung liegen also darin, daß bei allen Ausführungsformen wegen des Raumes, der zur Strömungsführung und für die Axial-Ventilatoren benötigt wird, die Gesamtbreite des Behandlungsraums nicht ausgenutzt werden kann.

Es ist die Aufgabe der vorliegenden Erfindung, eine Vorrichtung der im Oberbegriff des Anspruchs 1 angegebenen Gattung zu schaffen, welche diese Nachteile nicht mehr aufweist.

Der Erfindung liegt weiterhin die Aufgabe zugrunde, eine Vorrichtung zur beidseitigen Beblasung eines bahnförmigen Materials mit einem Behandlungsgas der angegebenen Gattung zu schaffen, die eine völlig symmetrische Strömungsführung oberhalb und unterhalb der Materialbahn-Ebene gewährleistet und bei üblichen Arbeitshöhen eine einfache Aufstellung auf dem Boden ohne weitere zusätzliche Maßnahmen, wie Unterkonstruktionen oder Gruben, erlaubt.

Diese Aufgabe wird durch die kennzeichnenden Merkmale des Patentanspruchs 1 gelöst.

Zweckmäßige Ausführungsformen werden durch die Merkmale der abhängigen Ansprüche definiert.

Die Anordnung von jeweils zwei Radial-Ventilatoren sowohl oberhalb als auch unterhalb der horizontal geführten Materialbahn in der im Merkmal d) des Patentanspruchs 1 beschriebenen Weise resultiert in einer vorteilhaften, relativ großen Platzersparnis innerhalb des Behandlungsraums. Der gesamte Behandlungsraum oberhalb bzw. unterhalb der Düsenrippen steht bei der Vorrichtung gemäß der vorliegenden Erfindung für den Einbau zusätzlicher Aggregate wie z.B. einer Beheizungseinrichtung oder einer Kühleinrichtung zur Verfügung.

Ein weiterer Vorteil der Vorrichtung zur beidseitigen Beblasung eines bahnförmigen Materials mit einem Behandlungsgas, wie sie durch den Patentanspruch 1 beschrieben wird, liegt darin, daß die an den Längsseiten angeordneten Aggregate problemlos von der Seite her gewartet oder inspiziert werden können und deshalb keine Notwendigkeit mehr besteht, für deren Ausbau eine Grube unter dem Behandlungsraum vorzusehen.

Die punktsymmetrische Anordnung der beiden Radial-Ventilatoren, die in der Ebene sowohl oberhalb als auch unterhalb der Materialbahn liegen, sorgt für eine gleichmäßige Durchströmung der jeweiligen Abschnitte des Behandlungsraums, da der Abströmbereich der Düsenrippen eines Radialventilators gleichzeitig den Ansaugbereich des zweiten punktsymmetrisch angeordneten Radial-Ventilators bildet.

Hierbei können sich die Düsenrippen über die gesamte Innenbreite des Behandlungsraums erstrecken.

Die ferner mit der Erfindung erzielten Vorteile werden darin gesehen, daß der Grundaufbau einer solchen Vorrichtung sowohl für die Schwebendführung von Materialbahnen als auch für die Rollenführung geeignet ist, wobei die Tragrollen nur die minimale, durch die gewünschte Bahnbreite bestimmte Länge haben. Dabei wird dafür gesorgt, daß an der Unterseite und an der Oberseite der Materialbahn der gleiche Wärmeübergang auftritt.

Die Erfindung wird im folgenden am Beispiel eines Hochkonvektionsofens zur Erwärmung von über Rollen geführten Glasscheiben unter Bezugnahme auf die beiliegenden, schematischen Zeichnungen näher erläutert. Es zeigen:
- Fig. 1: einen schematischen Längsmittelschnitt durch einen solchen Hochkonvektionsofen,
- Fig. 2: einen Querschnitt dieses Hochkonvektionsofens,
- Fig. 3: einen Horizontalschnitt des Hochkonvektionsofens, und
- Fig. 4: einen vergrößerten Ausschnitt eines Längsschnittes, aus dem die Anordnung der Düsenrippen und der Rollen zur Unterstützung und zum Transport der zu behandelnden Materialbahn ersichtlich ist.

Die in den Fig. 1 bis 4 dargestellte Hochkonvektionserwärmungsanlage für Glasscheiben 12 (siehe Fig. 4) ist allgemein durch das Bezugszeichen 10 angedeutet und weist einen geschlossenen Behandlungsraum 14 auf, der bei der dargestellten Ausführungsform im vertikalen Schnitt einen rechteckigen Querschnitt hat, d.h., die Wände des Behandlungsraums 14 bilden einen im Querschnitt rechteckigen Kasten.

Die Glasscheiben 12 liegen auf angetriebenen Rollen 1 und werden von den Rollen 1 durch die Hochkonvektionserwärmungsanlage 10 transportiert. Um unzulässige Verformungen der aufgrund der Erwärmung erweichten Glasscheiben 12 zu vermeiden, müssen die Rollen 1 entsprechend eng geteilt sein, also nur einen geringen Abstand voneinander haben, wie man beispielsweise aus den Fig. 1 und 3 erkennt.

Die relativ große Arbeitsbreite solcher Glasscheiben 12 bedingt außerdem einen relativ großen Durchmesser der Rollen 1. Üblich sind bei Verwendung keramischer Rollen Rollendurchmesser, die etwa 1/40 der freien, ungestützten Rollenspannweite betragen. Für die üblichen Abmessungen der zu behandelnden Glasscheiben 12 ist dies etwa maßstabsgerecht aus Fig. 4 ersichtlich.

Ein erwärmter Behandlungsgasstrom, insbesondere Luft, wird durch Düsenrippen 2 von unten (Düsenrippen 2ᵤ) bzw. von oben (Düsenrippen 2ₒ) auf die Glasscheiben 12 geblasen, wobei sich die unteren Düsenrippen 2ᵤ zwischen den Rollen 1 befinden, d.h., die Rollen 1 und die Düsenrippen 2ᵤ wechseln einander ab, wie man insbesondere aus Fig. 4 erkennt.

Oberhalb der Glasscheiben 12 sind die oberen Düsenrippen 2ₒ gegenüber den unteren Düsenrippen 2ᵤ angeordnet, wie ebenfalls aus Fig. 4 ersichtlich ist.

Um den gleichen Wärmeübergang an der Unterseite und an der Oberseite der Glasscheiben 12 zu erzielen, müssen die Düsenrippen 2 derart geformt werden, daß auf der Unterseite zwischen den Rollen 1 ein ausreichender Abströmquerschnitt erhalten bleibt und auf der Oberseite ein ähnliches Beaufschlagungsbild erreicht wird, wie auf der Unterseite. Ausserdem müssen die oberen Düsenrippen 2ₒ durch ihre Form den Aufstaueffekt an der Oberseite ausgleichen, der durch die Rollen 1 an der Unterseite zwischen den unteren Düsenrippen 2ᵤ entsteht, da sonst die Gefahr besteht, daß dünne Glasscheiben 12 durch zu kräftige Beblasung von unten von den Rollen 1 abgehoben oder zumindest nicht mehr zuverlässig transportiert werden.

Wie aus dem Querschnitt nach Fig. 1 ersichtlich ist, erstrecken sich die Düsenrippen 2 über die gesamte Innenbreite der Hochkonvektionserwärmungsanlage bzw. des Behandlungsraumes 14, während die Rollen (1) (siehe Fig. 2) seitlich aus dem Behandlungsraum 14 herausragen und damit außerhalb des Behandlungsraums 14 gelagert bzw. angetrieben werden.

Dies bedeutet, daß sich die Rollenlänge ausschließlich nach der geforderten Arbeitsbreite sowie nach dem im wesentlichen von der Temperatur im Behandlungsraum 14 abhängigen Aufbau seiner Wand richtet. Die Verlagerung der Rollen 1 erfolgt in bekannter Weise außerhalb des Behandlungsraums 14, vorzugsweise auf einem besonderen Verlagerungsgestell.

Aus Fig. 2 sind Ausblaskanäle 3 ersichtlich, die die Düsenrippen 2 von der Seite her beschicken und sich dementsprechend an einer Wand des Behandlungsraums 14 befinden. Die Düsenrippen 2 verjüngen sich von der Beschickungsseite zu ihrem Ende hin, wie man ebenfalls aus Fig. 2 erkennt. Eine Längsansicht der Ausblaskanäle 3 mit anschließenden Verteilerstücken 4 zeigt Fig. 2. Durch die Verringerung des Strömungsquerschnittes der Verteilerstücke 4 bzw. der Düsenrippen in Strömungsrichtung wird erreicht, daß in diesem trotz abnehmenden Volumenstrom die Strömungsgeschwindigkeit annähernd konstant bleibt.

Bei der in den Figuren dargestellten Hochkonvektionserwärmungsanlage für Glasscheiben dient als Strömungsantrieb ein Radial-Ventilator, nämlich ein Trommelläufer 5, wobei von jedem Trommelläufer 5 je ein Viertel der gesamten Düsenrippen 2 versorgt wird. Dies bedeutet, daß für den Einbau des Trommelläufers und des an diesen anschließenden Verteilerstücks 4 bzw. Ausblaskanals 3 jeweils die halbe Innenlänge einer Einheit dieser Hochkonvektionserwärmungsanlage 10 zur Verfügung steht. Zur Vereinfachung der Darstellung ist in den Figuren jeweils nur eine derartige Einheit abgebildet. Selbstverständlich können beliebig viele solcher Einheiten hintereinander angeordnet werden, wenn dies zur Erzielung der gewünschten Durchsatzleistung erforderlich ist.

Der Trommelläufer 5 ist in ein 360°-Spiralgehäuse (siehe Fig. 2) eingebaut; sein Ausblaskanal 3 hat eine Länge, wie sie zur Erzielung des optimalen Wirkungsgrades dieses Trommelläufers erforderlich ist, nämlich mindestens einem hydraulischen Durchmesser des Ventilatorausblasquerschnittes entspricht, um die notwendige Vergleichmäßigung der Strömung zu gewährleisten.

Wie man insbesondere aus den Fig. 1 und 2 erkennt, ist für jede Einheit dieser Hochkonvektionserwärmungsanlage über bzw. unter der Glasscheibe 12 ein Trommelläufer 5 vorgesehen, der sich an einer Wand des Behandlungsraums 14 befindet und das Behandlungsgas über den Ausblaskanal 3 und das Verteilerstück 4 in die zugehörigen Düsenrippen 2 bläst. Dabei sind die Trommelläufer 5 jeder Einheit punktsymmetrisch zu 180° angeordnet, wie man aus den Fig. 1 und 2 erkennt, d.h., bei dem Querschnitt nach den Fig. 1 und 2 befindet sich der untere Trommelläufer 5 auf der linken Seite des Behandlungsraumes 14 und der obere Trommelläufer 5 auf der rechten Seite des Behandlungsraumes. In der nächsten Einheit erfolgt diese Anordnung umgekehrt.

Zum Einbau einer Beheizungseinrichtung oder beim Betrieb einer entsprechenden Hochkonvektionsanlage als Kühlzone oder Kühleinrichtung steht der gesamte Innenraum 6 des Behandlungsraums 14 unterhalb oder oberhalb der Düsenrippen zur Verfügung.

Da der Ansaugbereich 7 jedes Trommelläufers 5 unterhalb bzw. oberhalb der Düsenrippen 2 in einem Bereich liegt, in dem das Behandlungsgas von dem gegenüber angeordneten Trommelläufer 5 ausgeblasen wird, stellt sich eine sehr gleichmäßig Mischung des umgewälzten Gasstromes ein. Hierdurch ergibt sich eine sehr gleichmäßige Temperaturverteilung im Gasstrom.

Aufgrund der Beschickung der Düsenrippen 2 einer Einheit in der ersten Hälfte von der einen und in der zweiten Hälfte von der gegenüberliegenden Seite werden Unterschiede ausgeglichen, die sich beispielsweise durch Temperaturänderungen des Gasstromes beim Durchströmen der Düsenrippen 2 ergeben. Würden nämlich die Düsenrippen 2 immer nur von der gleichen Seite dieser Hochkonvektionserwärmungsanlage 10 her beschickt, so könnte sich aufgrund dieses Störeinflusses ein keilförmiges Temperaturprofil in der Materialbahn ergeben, wie es durch die beschriebene, beidseitige Beschickung vermieden wird.

Es hat sich als zweckmäßig herausgestellt, wenn jeder Trommelläufer 5 die gleiche Anzahl von Düsenrippen 2 versorgt, die in ihren Hauptabmessungen gleich sind, um auch auf diese Weise zur gleichmäßigen Strömungsbeaufschlagung beizutragen.

## Patentansprüche

1. Vorrichtung zur beidseitigen Beblasung eines bahnförmigen Materials mit einem Behandlungsgas
a) mit einem Behandlungsraum (14) für das annähernd geradlinig bewegte bahnförmige Material (12),
b) mit zu beiden Seiten des bahnförmigen Materials (12) angeordneten Düsenrippen (2) für die Einleitung des Behandlungsgasstromes in den Behandlungsraum (14), und
c) mit sowohl oberhalb als auch unterhalb der horizontal geführten Materialbahn (12) angeordneten, in 360°-Spiralgehäuse eingebauten Radial-Ventilatoren (5);
**gekennzeichnet** durch die folgenden Merkmale:
d) jeweils zwei sowohl oberhalb als auch unterhalb der horizontal geführten Materialbahn (12) angeordnete Radial-Ventilatoren (5) sind zur Erzeugung des den Düsenrippen (2) von einer Seite her zugeführten Behandlungsgasstromes einerseits und zur Absaugung des Behandlungsgases aus dem Behandlungsraum (14) auf der gegenüberliegenden Seite andererseits jeweils zur Mitte der Vorrichtung punktsymmetrisch angeordnet und blasen in jeweils einen an der Längsseite der Vorrichtung angeordneten Ausblaskanal (3, 4) aus,
e) jeder Ausblaskanal (3, 4) weist einen ersten Bereich (3) mit konstantem oder annähernd konstantem Querschnitt und ein Verteilerstück (4) mit sich in Strömungsrichtung verringerndem Querschnitt auf, und
f) die Düsenrippen (2) erstrecken sich über die gesamte Innenbreite des Behandlungsraums.

2. Vorrichtung nach Anspruch 1, dadurch gekennzeichnet, daß jeder Radial-Ventilator (5) die gleiche Anzahl von in ihren Hauptabmessungen gleichen und quer zur Transportrichtung der Materialbahnen (12) angeordneten Düsenrippen (2) versorgt.

3. Vorrichtung nach einem der Ansprüche 1 oder 2, dadurch gekennzeichnet, daß die Radial-Ventilatoren (5) als Trommelläufer ausgebildet sind.

4. Vorrichtung nach einem der Ansprüche 1 bis 3, dadurch gekennzeichnet, daß der Bereich (3) des Ausblaskanals mit konstantem Querschnitt mindestens einen hydraulischen Durchmesser des Ventilatorausblasquerschnittes lang ist.

5. Vorrichtung nach einem der Ansprüche 1 bis 4, dadurch gekennzeichnet, daß das Verteilerstück (4) zur Versorgung der Düsenrippen (2) seitlich oberhalb von deren Eintrittsquerschnitt angeordnet ist.

6. Vorrichtung nach einem der Ansprüche 1 bis 5, dadurch gekennzeichnet, daß zwischen einigen oder allen Düsenrippen (2) der unteren Hälfte der Vorrichtung Rollen (1) für die Auflage und den Transport der Materialbahn (12) angeordnet sind, deren Verlagerung jeweils seitlich außerhalb des Behandlungsraumes (14) angebracht ist.

7. Vorrichtung nach einem der Ansprüche 1 bis 5, dadurch gekennzeichnet, daß die Düsenrippen (2) als Schwebedüsen zur berührungslosen Führung der Materialbahn (12) ausgebildet sind.

8. Vorrichtung nach einem der Ansprüche 1 bis 7, gekennzeichnet durch die Unterteilung in oder in der Nähe der Symmetrie-Ebene zwischen oberen und unteren Düsenrippen (2).

9. Vorrichtung nach einem der Ansprüche 1 bis 8, gekennzeichnet durch eine der Arbeitshöhe für die Materialbahn (12) genau oder annähernd entsprechende Höhe der Teilebene zwischen Oberteil und Unterteil von maximal 1,5 m und durch eine Arbeitsbreite von bis zu etwa 3 m.

## Claims

1. An apparatus for the bilateral blowing of a treatment gas onto a web-like or sheet-like material, comprising
a) a treatment space (14) for the approximately rectilinearly moved web-like or sheet-like material (12),
b) nozzle ribs (2) arranged on both sides of the web-like or sheet-like material (12) for introducing the treatment gas stream into the treatment space (14), and
c) radial fans (5) installed in a 360° spiral housing arranged both above and under the horizontally guided material web or sheet (12)
**characterized by** the following features:
d) respectively two radial fans (5) arranged both above and under the horizontally guided material web or sheet (12) for generating the treatment gas stream fed to the nozzle ribs (2) from one side, on the one hand, and for evacuating the treatment gas from the treatment space (14) on the opposite side, on the other hand, are arranged respectively point-symmetrically to the center of the apparatus and blow out respectively into a blow-out duct (3, 4), arranged on the longitudinal side of the apparatus,
e) each blow-out duct (3, 4) comprises a first region (3) with constant or approximately constant cross-section and a distribution piece (4) with a cross-section diminishing in the flow direction, and
f) the nozzle ribs (2) extend over the entire inner width of the treatment space.

2. An apparatus according to claim 1, characterized in that each radial fan (5) supplies the same number of nozzle ribs (2) which are identical in their major dimensions and arranged transversely of the transport direction of the material web or sheet (12).

3. An apparatus according to one of claims 1 or 2, characterized in that the radial fans (5) are constructed as drum impellers.

4. An apparatus according to one of claims 1 to 3, characterized in that the region (3) of the blow-out duct with constant cross-section is at least one hydraulic diameter of the fan blow-out cross-section long.

5. An apparatus according to one of claims 1 to 4, characterized in that the distributor piece (4) for supplying the nozzle ribs (2) is arranged laterally above the entrance cross-section thereof.

6. An apparatus according to one of claims 1 to 5, characterized in that between some or all of the nozzle ribs (2) of the lower half of the apparatus rollers (1) are arranged for the support and transport of the material web or sheet (12), the displacement mounting of which is disposed in each case laterally outside the treatment space (14).

7. An apparatus according to one of claims 1 to 5, characterized in that the nozzle ribs (2) are constructed as floating nozzles for the contactless guiding of the material web or sheet (12).

8. An apparatus according to one of claims 1 to 7, characterized by the division in or in the vicinity of the symmetry plane between the upper and lower nozzle ribs (2).

9. An apparatus according to one of claim 1 to 8 characterized by a division plane level between upper and lower part corresponding exactly or approximately to the working height for the material web or sheet (12) of at the most 1.5 m and a working width of up to about 3m.

## Revendications

1. Dispositif de soufflage bilatéral d'un matériau en bande avec un gaz de traitement, comportant
a) une zone de traitement (14) pour le matériau (12) en bande transporté de manière presque rectiligne,
b) des nervures de tuyère (2) disposées de part et d'autre du matériau en bande (12) pour l'introduction du courant de gaz de traitement dans la zone de traitement (14) et
c) des ventilateurs radiaux (5) intégrés dans une volute à 360° et disposés tant au-dessus qu'en dessous de la bande de matériau (12) guidée horizontalement
caractérisé en ce que :
d) respectivement deux ventilateurs radiaux (5) disposés tant au-dessus qu'en dessous de la bande de matériau (12) guidée horizontalement sont respectivement disposés symétriquement par rapport à un point, à savoir au milieu du dispositif pour, d'une part, la production du courant de gaz de traitement amené aux nervures de tuyère (2) par un côté et pour, d'autre part, l'aspiration du gaz de traitement de la zone de traitement (14) du côté opposé et soufflent dans un canal de soufflage (3, 4) disposé respectivement contre la longueur du dispositif;
e) chaque canal de soufflage (3, 4) présente une première zone (3) de section constante ou quasi constante et une pièce de distribution (4) avec une section se rétrécissant dans la direction de l'écoulement, et
f) les nervures de tuyère (2) s'étendent sur toute la largeur interne de la zone de traitement.

2. Dispositif selon la revendication 1 caractérisé en ce que chaque ventilateur radial (5) alimente le même nombre de nervures de tuyère (2) de mêmes dimensions et disposées perpendiculairement à la direction de transport des bandes de matériau (12).

3. Dispositif selon l'une quelconque des revendications 1 ou 2 caractérisé en ce que les ventilateurs radiaux (5) sont conçus comme des rotors cylindriques.

4. Dispositif selon l'une quelconque des revendications 1 à 3 caractérisé en ce que la zone (3) du canal de soufflage, de section constante, présente une longueur d'au moins un diamètre hydraulique de la section de soufflage du ventilateur.

5. Dispositif selon l'une quelconque des revendications 1 à 4 caractérisé en ce que la pièce de distribution (4) pour l'alimentation des nervures de tuyère (2) est disposée latéralement au-dessus de leur section d'entrée.

6. Dispositif selon l'une quelconque des revendications 1 à 5 caractérisé en ce qu'entre certaines ou toutes les nervures de tuyère (2) de la moitié inférieure du dispositif sont disposés des rouleaux(l)pour le support et le transport de la bande de matériau (12), dont le déplacement se fait respectivement latéralement en dehors de la zone de traitement (14).

7. Dispositif selon l'une quelconque des revendications 1 à 5 caractérisé en ce que les nervures de tuyère (2) sont conçues comme des tuyères suspendues en vue du guidage sans contact de la bande de matériau (12).

8. Dispositif selon l'une quelconque des revendications 1 à 7 caractérisé par la subdivision dans un plan symétrique ou presque des nervures de tuyère (2) supérieures et inférieures.

9. Dispositif selon l'une quelconque des revendications 1 à 8 caractérisé par une hauteur du plan partiel entre les parties supérieure et inférieure, correspondant précisément ou approximativement à la hauteur de travail pour la bande de matériau (12), de maximum 1,5 m et par une largeur de travail allant jusqu'à environ 3 m.
